# EUROPÄISCHE PATENTSCHRIFT

(11) **EP 3 661 808 B1**
(45) Veröffentlichungstag und Bekanntmachung des Hinweises auf die Patenterteilung: **14.04.2021**
(21) Anmeldenummer: 18743714.0
(22) Anmeldetag: 12.07.2018
(51) Int. Cl.: B60R 1/04, B60R 11/02, B60R 21/02

(54) **HALTEVORRICHTUNG**
HOLDER DEVICE
DISPOSITIF DE SUPPORT

(30) Priorität: 05.08.2017 DE 102017007379
(43) Veröffentlichungstag der Anmeldung: 10.06.2020
(73) Patentinhaber: Audi AG, 85045 Ingolstadt (DE)
(72) Erfinder: HELD, Stefan, 85049 Ingolstadt (DE)
(86) Internationale Anmeldenummer: PCT/EP2018/068863
(87) Internationale Veröffentlichungsnummer: WO 2019/029938

(56) Entgegenhaltungen:
- EP-A1- 2 474 449
- EP-A2- 1 078 818
- EP-A2- 1 707 440
- WO-A1-03/065084
- DE-A1-102016 005 207

## Beschreibung

Die Erfindung betrifft eine Haltevorrichtung für eine Rückblick- und/oder Anzeigeeinrichtung eines Kraftfahrzeugs, mit mindestens einer an einem scheiben- oder plattenartigen Gegenstand festgelegten Halteplatte, mit mindestens einem Befestigungsfuß, der an der Halteplatte lösbar anordenbar oder angeordnet ist, mit wenigstens einem am Befestigungsfuß festgelegten oder den Befestigungsfuß zumindest abschnittsweise umgebenden Rückhaltemittel, das an einer zur Halteplatte beabstandeten Fahrzeugkomponente festlegbar oder festgelegt ist und das eine Bewegung des Befestigungsfußes in einem von der Halteplatte zumindest teilweise gelösten Zustand form- und/oder kraftschlüssig begrenzt, mit mindestens einem Festlegeelement, durch das das Rückhaltemittel an dem scheiben- oder plattenartigen Gegenstand und/oder der Halteplatte festlegbar oder festgelegt ist, und mit mindestens einem scharnierartigen Lagermittel, durch das das Rückhaltemittel an der Fahrzeugkomponente festgelegt ist.

Eine Haltevorrichtung für eine Rückblick- oder eine Anzeigeeinrichtung in einem Kraftfahrzeug dient dazu, die Rückblick- oder eine Anzeigeeinrichtung derart zu halten, dass sie von einem Fahrzeuginsassen, insbesondere dem Fahrer des Kraftfahrzeugs, möglichst einfach einsehbar und ablesbar ist. Bei einer Anzeigenvorrichtung kann es sich allgemein um einen Monitor oder ein Display, beispielsweise um ein Navigationsgerät, handeln. Typischerweise ist eine Haltevorrichtung für eine Rückblickeinrichtung derart im Innenraum des Kraftfahrzeugs angeordnet, dass der Fahrer des Kraftfahrzeugs den nachfolgenden Verkehr beobachten kann. Die Haltevorrichtung kann beispielsweise an einer Windschutzscheibe des Kraftfahrzeugs befestigt sein.

Eine solche Rückblickeinrichtung wird beispielsweise als Innenspiegel an der Innenseite der Windschutzscheibe angeordnet. Hierzu wird die Halteplatte zumeist scheibenseitig verklebt. An der Halteplatte ist ein Befestigungsfuß lösbar angeordnet, beispielsweise über eine Bajonettverbindung. An dem Befestigungsfuß ist das Anzeigeelement angeordnet, das den eigentlichen Spiegel beinhaltet.

Das Dokument WO 03/065084 A1 offenbart eine Haltevorrichtung gemäß dem Oberbergriff des Anspruchs 1, wobei ein Zubehörsystem eines Fahrzeugs mit einer Zubehörmodulanordnung mit einem Montageabschnitt, einem Kopfabschnitt und einer Rückspiegelanordnung beschrieben ist.

Optional kann ein Zubehörmodul schwenkbar am Dachhimmel des Fahrzeugs angebracht sein, beispielsweise an einer Schwenkachse oder einem Gelenk, und kann einen erweiterbaren Bereich des Gehäuses enthalten, um ein durchgehendes Modulgehäuse bereitzustellen, während das Biegen des Modulgehäuses aufgenommen wird, wenn das Modul zur Windschutzscheibe hin oder von dieser weg geschwenkt wird.

Aus dem Dokument EP 1 078 818 A2 ist ein digitaler Tonprozessor bekannt, der vorgesehen ist, um das Verhältnis von Stimm- zu Nicht-Stimmrauschen des von einem Fahrzeugaudiosystem wie einem Mobiltelefon, einem Notfallkommunikationsgerät oder einem anderen Audiogerät verarbeiteten Signals zu verbessern. Zudem ist eine Anzeige zur Verwendung mit dem Fahrzeug-Audiosystem offenbart, welche eingerichtet ist, einem Benutzer des Audiosystems ein Statussignal zu liefern, das sich auf eine Empfangsqualität eines Stimmsignals vom Benutzer bezieht. Das Mikrofon des Audiosystems kann in einem Zubehörmodul montiert sein, das an einer Innenfläche einer Fahrzeugwindschutzscheibe montiert sein kann.

Aus dem Dokument EP 1 707 440 A2 sind Vorrichtungen mit elektronischen Bauteilen wie Sensoren und Kameras bekannt, die zu einem Modul zusammengefasst werden und an einer vorbestimmten Stelle einer Windschutzscheibe eines Kraftfahrzeugs positioniert sind.

Zur Erfüllung von gesetzlichen Vorschriften muss eine Rückblickeinrichtung beziehungsweise eine Haltevorrichtung für eine Rückblickeinrichtung im Fahrzeuginnenraum so ausgestaltet sein, dass sich die Rückblick- und/oder Anzeigeeinrichtung beispielsweise bei einem direkten Kopfaufschlag durch einen Fahrzeuginsassen aus ihrer Halterung löst. Bei einem Aufprall des Kraftfahrzeugs besteht allerdings die Gefahr, dass sich die Rückblick- und/oder Anzeigeeinrichtung durch einen Energieimpuls, beispielsweise auch durch das Auslösen eines Airbagsystems, von seiner Halterung löst, sich hierdurch frei im Kraftfahrzeuginnenraum bewegt und einen Fahrzeuginsassen verletzen kann.

Eine Aufgabe eines Ausführungsbeispiels der Erfindung besteht darin, eine Haltevorrichtung für eine Rückblick- und/oder Anzeigeeinrichtung vorzuschlagen, bei der die Gefahr eines Verletzens von Fahrzeuginsassen reduziert ist.

Diese Aufgabe wird erfindungsgemäß durch eine eingangs genannte Haltevorrichtung gelöst, wobei das Festlegeelement mindestens eine Sollbruchstelle umfasst, wobei die Sollbruchstelle derart ausgebildet ist, dass sie bei einem Normalbetrieb des Kraftfahrzeugs, also bei einem Auftreten von bei Betrieb des Kraftfahrzeugs zu erwartenden Beschleunigungskräften, hält und bei Überschreiten von Aufprall-typischen Beschleunigungskräften nachgibt und bricht.

Dadurch, dass das Rückhaltemittel eine Bewegung des Befestigungsfußes in dem von der Halteplatte zumindest teilweise gelösten Zustand begrenzt, ist die Gefahr reduziert, dass der Befestigungsfuß nebst an dem Befestigungsfuß festgelegten Anzeigeelement frei und unkontrolliert durch den Fahrzeuginnenraum bewegt werden. Hierdurch ist die Gefahr eines Verletzens von Fahrzeuginsassen reduziert.

Bei der Rückblick- und/oder Anzeigeeinrichtung kann es sich beispielsweise um einen Innenspiegel, einen Seitenspiegel, einen Monitor oder Display und Dergleichen handeln. Hierbei ist es denkbar, dass die Haltevorrichtung mindestens ein Anzeigeelement umfasst, das an einem der Halteplatte abgewandten Ende des Befestigungsfuß am Befestigungsfuß festgelegt ist und an dem ein Spiegel oder ein Monitor, der entsprechende Bilder von Kameras, die die Rückblick- oder Seitenblicksituation aufnehmen, festlegbar oder festgelegt ist.

Bei dem scheiben- oder plattenartigen Gegenstand kann es sich um eine Front-, Heck-, und/oder Seitenscheibe eines Kraftfahrzeugs handeln.

Die Halteplatte kann an dem plattenartigen Gegenstand unlösbar festgelegt sein, beispielsweise mittels Verkleben.

Grundsätzlich ist es denkbar, dass das Anzeigeelement starr und unbeweglich am Befestigungsfuß festgelegt ist. Darüber hinaus ist es denkbar, dass das Anzeigeelement relativ zum Befestigungsfuß bewegbar ist.

Grundsätzlich ist es denkbar, dass das Rückhaltemittel ausschließlich an der Fahrzeugkomponente festgelegt ist. Die Stabilität der Haltevorrichtung lässt sich jedoch erhöhen, wenn die Haltevorrichtung mindestens ein Festlegeelement, gemäß der Erfindung, umfasst, durch das das Rückhaltemittel an dem scheiben- oder plattenartigen Gegenstand und/oder der Halteplatte festlegbar oder festgelegt ist und wenn die Haltevorrichtung mindestens ein scharnierartiges Lagermittel umfasst, durch das das Rückhaltemittel an der Fahrzeugkomponente festgelegt ist.

Hierdurch können die auf die Fahrzeugkomponenten wirkenden Kräfte im Normalbetrieb des Kraftfahrzeugs, also wenn der Befestigungsfuß an der Halteplatte festgelegt ist, reduziert werden. Dadurch, dass das Rückhaltemittel durch ein scharnierartiges Lagermittel an der Fahrzeugkomponente festgelegt ist, kann das Rückhaltemittel in dem Zustand, bei dem der Befestigungsfuß zumindest teilweise von der Halteplatte gelöst ist, um die Drehachse des scharnierartigen Lagermittels drehen. Hierdurch sind die wirkenden Verzögerungskräfte reduzierbar und gleichzeitig ein Bewegen des Befestigungsfußes und des Anzeigeelements im Fahrzeuginnenraum auf einen für eine Verletzung des Fahrzeuginsassen nicht relevanten Bereich begrenzt.

Das scharnierartige Lagermittel ist vorzugsweise an einem dem Befestigungsabschnitt abgewandten Ende des Rückhaltemittels angeordnet.

Das Rückhaltemittel kann grundsätzlich beliebig ausgebildet sein. Es erweist sich als vorteilhaft, wenn das Rückhaltemittel ein flexibel biegbares Rückhalteelement, wie Seil, Band oder Kabel, umfasst und/oder wenn das Rückhaltemittel ein formstabiles Rückhaltelement umfasst.

Wenn das Rückhaltemittel ein flexibel biegbares Rückhalteelement, wie Seil, Band oder Kabel umfasst, kann das Rückhaltemittel kompakt und platzsparend ausgebildet sein. Wenn das Rückhaltemittel ein formstabiles Rückhalteelement umfasst, kann es beispielsweise profil- oder gehäuseartig ausgebildet sein.

Grundsätzlich ist es denkbar, dass das Rückhaltemittel lösbar oder unlösbar am Befestigungsfuß festgelegt ist. Wenn das Rückhaltemittel den Befestigungsfuß zumindest abschnittsweise umgibt, erweist es sich als vorteilhaft, wenn das Rückhaltemittel einen eine Öffnung umfassenden Befestigungsabschnitt umfasst, durch dessen Öffnung der Befestigungsfuß hindurcherstreckt ist und wenn der Befestigungsfuß ein Anschlagmittel umfasst, das einen Durchmesser umfasst der größer ist als der Durchmesser der Öffnung des Befestigungsabschnitts des Rückhaltemittels.

Hierdurch ist es ermöglicht, dass das Rückhaltemittel in der gefügten Anordnung berührungsfrei zum Befestigungsfuß angeordnet ist. Solchenfalls erweist es sich als vorteilhaft, wenn der Befestigungsfuß das Anschlagmittel umfasst. Im Falle eines Lösens des Befestigungsfußes von der Halteplatte, hat der Befestigungsfuß ein gewisses Spiel bevor das Anschlagmittel am Rückhaltemittel anliegt und die Bewegung abrupt begrenzt wird.

Das Anschlagmittel lässt sich einfach und kostengünstig realisieren, wenn das Anschlagmittel einen Vorsprung und/oder einen sich vom Anzeigeelement in Richtung Halteplatte erweiternden Querschnitt des Befestigungsfußes umfasst.

Bei einer Weiterbildung letztgenannter Ausführungsform erweist es sich als vorteilhaft, wenn das Festlegeelement mindestens ein Rastmittel, mit dem das Rückhaltemittel an der Halteplatte verrastbar ist und/oder mindestens eine Klebeverbindung umfasst, mit dem das Rückhaltemittel am scheiben- oder plattenartigen Gegenstand und/oder der Halteplatte festlegbar oder festgelegt ist und wenn das scharnierartige Lagermittel das Rückhaltemittel für eine Rotationsbewegung im von der Halteplatte zumindest teilweise gelösten Zustand des Befestigungsfußes freigibt.

Darüber hinaus ist bei einer Ausführungsform der Haltevorrichtung vorgesehen, dass das Rückhaltemittel eine die Halteplatte und/oder zumindest den Befestigungsfuß, insbesondere vollumfänglich, umgebende gehäuseartige Abdeckung umfasst.

Hierdurch kann eine optisch ansprechende Ausgestaltung des Rückhaltemittels erzielt werden.

Bei der Fahrzeugkomponente kann es sich um eine beliebige Komponente des Kraftfahrzeugs handeln, die im Fahrzeuginnenraum im Bereich der Rückblick- und/oder Anzeigeeinrichtung angeordnet ist. Hierbei erweist es sich als vorteilhaft, wenn die Fahrzeugkomponente einen Kabelkanal, einen Adapter, eine Kamera, ein Fahrassistenzsystem und/oder die Verkleidung eines Fahrzeugdachs umfasst.

Das Rückhaltemittel kann ein beliebiges Material umfassen. Es lässt sich einfach und kostengünstig herstellen, wenn das Rückhaltemittel einen Ein- oder Mehr-Komponenten Kunststoff, ein Gewebe und/oder ein Metall, insbesondere Leichtmetall, umfasst.

Darüber hinaus sind Mischformen denkbar, beispielsweise dass der Befestigungsabschnitt aus einem Kunststoff gebildet ist und der Rest des Befestigungsmittels beispielsweise durch ein Band oder ein Metall mit der Fahrzeugkomponente verbunden ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Haltevorrichtung.

In der Zeichnung zeigt:
- Figur 1: Eine schematische Seitenansicht auf eine Haltevorrichtung im gefügten Zustand;
- Figur 2: Eine schematische Seitenansicht auf die Haltevorrichtung gemäß Figur 1 in einem gelösten Zustand.

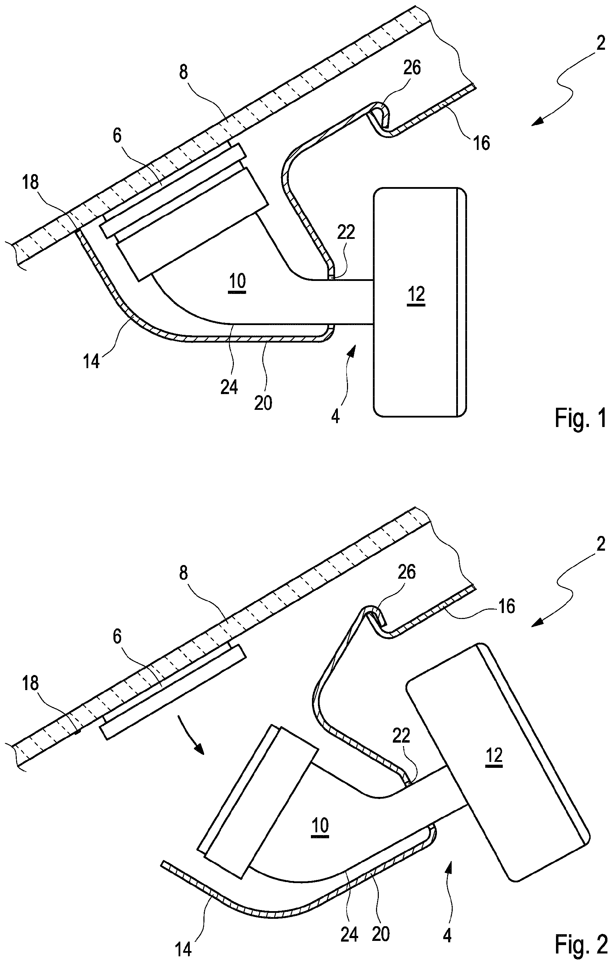

Die Figuren 1 und 2 zeigen eine insgesamt mit dem Bezugszeichen 2 versehene Haltevorrichtung für eine Rückblick- und/oder Anzeigeeinrichtung 4 eines Kraftfahrzeugs (in den Figuren nicht dargestellt). Die Haltevorrichtung 2 umfasst eine Halteplatte 6, die an einem scheiben- oder plattenartigen Gegenstand 8 festgelegt ist. An der Halteplatte 6 ist ein Befestigungsfuß 10 lösbar angeordnet. An dem Befestigungsfuß 10 ist ein Anzeigeelement 12, an dem der Halteplatte 5 abgewandten Ende des Befestigungsfußes 10 festgelegt.

Die Figuren 1 und 2 zeigen ein Ausführungsbeispiel der Haltevorrichtung 2, bei der ein den Befestigungsfuß 10 umgebendes Rückhaltemittel 14 vorgesehen ist, das an einer zur Halteplatte 6 beabstandeten Fahrzeugkomponente 16 festgelegt ist. Durch die Fahrzeugkomponente 16 wird eine Bewegung des Befestigungsfußes 10 in einem von der Halteplatte 6 zumindest teilweise gelösten Zustand (Figur 2) begrenzt.

Figur 1 zeigt die Haltevorrichtung 2 in einem gefügten Zustand. Bei diesem ist der Befestigungsfuß 10 an der Halteplatte 6 beispielsweise mittels Bajonettverschluss, festgelegt. Das Rückhaltemittel 14 ist bei dem in Figur 1 gezeigtem Ausführungsbeispiel gehäuseartig ausgebildet. Über ein Festlegeelement 18 der Haltevorrichtung 2 ist das Rückhaltemittel 14 an dem scheiben- oder plattenartigen Gegenstand 8 festgelegt. Hierbei kann das Festlegeelement 18 beispielsweise eine Klebverbindung umfassen. Darüber hinaus umfasst das Rückhaltemittel 14 einen Befestigungsabschnitt 20, der eine Öffnung 22 aufweist. Durch die Öffnung 22 des Befestigungsabschnitts 20 ist der Befestigungsfuß 10 erstreckt. Der Befestigungsfuß 10 umfasst ein Anschlagmittel 24, das einen Durchmesser umfasst, der größer ist als der Durchmesser der Öffnung 22 des Befestigungsabschnitts 20. Hierdurch kann vermieden werden, dass der Befestigungsfuß 10 aus dem Rückhaltemittel 14 herausrutschen kann. An dem dem Befestigungsabschnitt 20 abgewandten Ende des Rückhaltemittels 14, umfasst das Rückhaltemittel 14 ein scharnierartiges Lagermittel 26. Über das scharnierartige Lagermittel 26 ist das Rückhaltemittel 14 mit der Fahrzeugkomponente 16 derart festgelegt, dass das Rückhaltemittel 14 eine Rotationsbewegung um das Lagermittel 26 durchführen kann. Dieses erweist sich insbesondere bei dem in Figur 2 gezeigten, gelösten Zustand des Befestigungsfußes 10 von der Halteplatte 6.

Figur 2 zeigt die Haltevorrichtung 2 in einem Zustand, bei dem der Befestigungsfuß 10 von der Halteplatte 6 gelöst ist. Auch das Festlegeelement 18, das eine Sollbruchstelle umfasst, wurde gelöst, beispielsweise als Folge von hohen Beschleunigungskräften, so dass Befestigungsfuß 10, Anzeigeelement 12 und Rückhaltemittel 14 eine Rotationsbewegung um das scharnierartige Lagermittel 26 durchführen können. Hierdurch ist gewährleistet, dass die einzelnen Komponenten der Haltevorrichtung 2 sowie der Rückblick- und/oder Anzeigeeinrichtung 4 beim Auftreten von hohen Beschleunigungskräften durch den Fahrzeuginnenraum des Kraftfahrzeugs unkontrolliert herumfliegen. Durch das scharnierartige Lagermittel 26 und durch das Rückhaltemittel 14 ist hierdurch die Bewegung der einzelnen Komponenten begrenzt.

### Bezugszeichenliste

- 2: Haltevorrichtung
- 4: Anzeigeeinrichtung
- 6: Halteplatte
- 8: plattenartiger Gegenstand
- 10: Befestigungsfuß
- 12: Anzeigeelement
- 14: Rückhaltemittel
- 16: Fahrzeugkomponente
- 18: Festlegeelement
- 20: Befestigungsabschnitt
- 22: Öffnung
- 24: Anschlagmittel
- 26: scharnierartiges Lagermittel

## Patentansprüche

1. Haltevorrichtung (2) für eine Rückblick- und/oder Anzeigeeinrichtung (4) eines Kraftfahrzeugs mit mindestens einer an einem scheiben- oder plattenartigen Gegenstand (8) festgelegten Halteplatte (6), mit mindestens einem Befestigungsfuß (10), der an der Halteplatte (6) lösbar anordenbar oder angeordnet ist, mit wenigstens einem am Befestigungsfuß (10) festgelegten oder den Befestigungsfuß (10) zumindest abschnittsweise umgebenden Rückhaltemittel (14), das an einer zur Halteplatte (6) beabstandeten Fahrzeugkomponente (16) festlegbar oder festgelegt ist und das eine Bewegung des Befestigungsfußes (10) in einem von der Halteplatte (6) zumindest teilweise gelösten Zustand form- und/oder kraftschlüssig begrenzt, mit mindestens einem Festlegeelement (18), durch das das Rückhaltemittel (14) an dem scheiben- oder plattenartigen Gegenstand (8) und/oder der Halteplatte (6) festlegbar oder festgelegt ist, und mit mindestens einem scharnierartigen Lagermittel (26), durch das das Rückhaltemittel (14) an der Fahrzeugkomponente (16) festgelegt ist, **dadurch gekennzeichnet, dass** das Festlegeelement (18) mindestens eine Sollbruchstelle umfasst, wobei die Sollbruchstelle derart ausgebildet ist, dass sie bei einem Normalbetrieb des Kraftfahrzeugs, also bei einem Auftreten von bei Betrieb des Kraftfahrzeugs zu erwartenden Beschleunigungskräften, hält und bei Überschreiten von Aufprall-typischen Beschleunigungskräften nachgibt und bricht.

2. Haltevorrichtung (2) nach Anspruch 1, **dadurch gekennzeichnet, dass** das Rückhaltemittel (14) ein flexibel biegbares Rückhalteelement, wie Seil, Band oder Kabel, umfasst und/oder dass das Rückhaltemittel (14) ein formstabiles Rückhaltelement umfasst.

3. Haltevorrichtung (2) nach Anspruch 1 oder 2, **dadurch gekennzeichnet, dass** das Rückhaltemittel (14) einen eine Öffnung (22) umfassenden Befestigungsabschnitt (20) umfasst, durch dessen Öffnung (22) der Befestigungsfuß (10) hindurcherstreckt ist und dass der Befestigungsfuß (10) ein Anschlagmittel (24) umfasst, das einen Durchmesser umfasst, der größer ist als der Durchmesser der Öffnung (22) des Befestigungsabschnitts (20) des Rückhaltemittels (14).

4. Haltevorrichtung (2) nach Anspruch 3, **dadurch gekennzeichnet, dass** das Anschlagmittel (24) einen Vorsprung und/oder einen sich vom Anzeigeelement (12) in Richtung Halteplatte (6) erweiternden Querschnitt des Befestigungsfußes (10) umfasst.

5. Haltevorrichtung (2) nach einem der vorhergehenden Ansprüche, **dadurch gekennzeichnet, dass** das Festlegeelement (18) mindestens ein Rastmittel, mit dem das Rückhaltemittel (14) an der Halteplatte (6) verrastbar ist und/oder mindestens eine Klebeverbindung umfasst, mit dem das Rückhaltemittel (14) am scheiben- oder plattenartigen Gegenstand (8) und/oder der Halteplatte (6) festlegbar oder festgelegt ist und dass das scharnierartige Lagermittel (26) das Rückhaltemittel (14) für eine Rotationsbewegung im von der Halteplatte (6) zumindest teilweise gelösten Zustand des Befestigungsfußes (10) freigibt.

6. Haltevorrichtung (2) nach mindestens einem der vorhergehenden Ansprüche, **dadurch gekennzeichnet, dass** das Rückhaltemittel (14) eine die Halteplatte (6) und/oder zumindest den Befestigungsfuß (10), insbesondere vollumfänglich, umgebende gehäuseartige Abdeckung umfasst.

7. Haltevorrichtung (2) nach mindestens einem der vorhergehenden Ansprüche, **dadurch gekennzeichnet, dass** die Fahrzeugkomponente (16) einen Kabelkanal, einen Adapter, eine Kamera, ein Fahrassistenzsystem und/oder die Verkleidung eines Fahrzeugdachs umfasst.

8. Haltevorrichtung (2) nach einem der vorangehenden Ansprüche, **dadurch gekennzeichnet, dass** das Rückhaltemittel (14) einen Ein- oder Mehr-Komponenten Kunststoff, ein Gewebe und/oder ein Metall, insbesondere Leichtmetall, umfasst.

## Claims

1. Holding device (2) for a rearview and/or display device (4) of a motor vehicle having at least one holding plate (6) secured onto a panel or plate-like object (8), at least one securing foot (10), which can be arranged or is arranged detachably on the holding plate (6), with at least one retaining means (14) which is secured onto the securing foot (10) or at least partly surrounds the securing foot (10), which retaining means can be secured or is secured onto a vehicle component (16) spaced apart from the holding plate (6), and which limits in a form and/or force-fitting manner a movement of the securing foot (10) when in a state where it is at least partly detached from the holding plate (6), having at least one securing element (18) by which the retaining means (14) can be secured or is secured onto the panel or plate-like object (8) and/or the holding plate (6), and having at least one hinge-like bearing means (26), by means of which the retaining means (14) is secured onto the vehicle component (16), **characterised in that** the securing element (18) comprises at least one predetermined breaking point, wherein the predetermined breaking point is configured such that it holds during normal operation of the motor vehicle, i.e. on the occurrence of acceleration forces to be anticipated during the operation of the motor vehicle, and yields and breaks when acceleration forces that are typical of impact are exceeded.

2. Holding device (2) according to claim 1, **characterised in that** the retaining means (14) comprises a flexibly bendable retaining element, such as a rope, band or cable, and/or **in that** the retaining means (14) comprises a dimensionally stable retaining element.

3. Holding device (2) according to claim 1 or 2, **characterised in that** the retaining means (14) comprises a fastening section (20) with an opening (22), through which opening (22) the securing foot (10) is extended, and **in that** the securing foot (10) comprises a stop means (24) which has a diameter which is greater than the diameter of the opening (22) of the fastening section (20) of the retaining means (14).

4. Holding device (2) according to claim 3, **characterised in that** the stop means (24) comprises a projection and/or a cross-section of the securing foot (10) which widens from the display element (12) in the direction of the holding plate (6).

5. Holding device (2) according to any of the preceding claims, **characterised in that** the securing element (18) comprises at least one catching means, by which the retaining means (14) can be attached to the holding plate (6), and/or at least one adhesive bond, by which the retaining means (14) can be secured or is secured onto the panel or plate-like object (8) and/or the holding plate (6), and **in that** the hinge-like bearing means (26) releases the retaining means (14) for a rotational movement in the state of the securing foot (10) which is at least partly released from the holding plate (6).

6. Holding device (2) according to at least one of the preceding claims, **characterised in that** the retaining means (14) comprises a housing-like cover which surrounds, in particular over the whole periphery, the holding plate (6) and/or at least the securing foot (10).

7. Holding device (2) according to at least one of the preceding claims, **characterised in that** the vehicle component (16) comprises a cable channel, an adapter, a camera, a driver assistance system and/or the covering of a vehicle roof.

8. Holding device (2) according to any of the preceding claims, **characterised in that** the retaining means (14) comprises a single or multi-component plastic, a fabric and/or a metal, in particular a light metal.

## Revendications

1. Dispositif de support (2) pour un dispositif de rétro-vision et/ou d'affichage (4) d'un véhicule automobile avec au moins une plaque de support (6) fixée à un objet (8) de type vitre ou de plaque, avec au moins un pied de fixation (10) qui est ou peut être agencé de manière amovible au niveau de la plaque de support (6), avec au moins un moyen de retenue (14) entourant au moins par sections le pied de fixation (10) ou fixé au pied de fixation (10), qui est ou peut être fixé à un composant de véhicule (16) espacé de la plaque de support (6) et qui limite un mouvement du pied de fixation (10) dans un état détaché au moins partiellement de la plaque de support (6) à complémentarité de formes et/ou à force, avec au moins un élément de fixation (18), à travers lequel le moyen de retenue (14) est ou peut être fixé à l'objet (8) de type vitre ou plaque et/ou la plaque de support (6), et avec au moins un moyen de palier (26) de type charnière à travers lequel le moyen de retenue (14) est fixé au composant de véhicule (16), **caractérisé en ce que** l'élément de fixation (18) comporte au moins un point destiné à la rupture, dans lequel le point destiné à la rupture est réalisé de telle manière qu'il maintienne pour un fonctionnement normal du véhicule automobile, aussi pour une survenue de forces d'accélération à attendre lors du fonctionnement du véhicule automobile et cède et rompe en cas de dépassement de forces d'accélération typiques à l'impact.

2. Dispositif de support (2) selon la revendication 1, **caractérisé en ce que** le moyen de retenue (14) comporte un élément de retenue flexible tel qu'une corde, une bande ou un câble et/ou que le moyen de retenue (14) comporte un élément de retenue de forme stable.

3. Dispositif de support (2) selon la revendication 1 ou 2, **caractérisé en ce que** le moyen de retenue (14) comporte une section de fixation (20) comprenant une ouverture (22), à travers l'ouverture de laquelle (22) le pied de fixation (10) est enfiché et que le pied de fixation (10) comporte un moyen de butée (24) qui comporte un diamètre qui est supérieur au diamètre de l'ouverture (22) de la section de fixation (20) du moyen de retenue (14).

4. Dispositif de support (2) selon la revendication 3, **caractérisé en ce que** le moyen de butée (24) comporte une saillie et/ou une section transversale s'élargissant de l'élément d'affichage (12) en direction de la plaque de support (6) du pied de fixation (10).

5. Dispositif de support (2) selon l'une des revendications précédentes, **caractérisé en ce que** l'élément de fixation (18) comporte au moins un moyen d'encliquetage, avec lequel le moyen de retenue (14) peut être encliqueté au niveau de la plaque de support (6) et/ou au moins une liaison de collage, avec lequel le moyen de retenue (14) est ou peut être fixé à l'objet (8) de type vitre ou plaque et/ou la plaque de support (6) et que le moyen de palier (26) de type charnière libère le moyen de retenue (14) pour un mouvement de rotation dans l'état au moins partiellement détaché de la plaque de support (6) du pied de fixation (10).

6. Dispositif de support (2) selon au moins l'une des revendications précédentes, **caractérisé en ce que** le moyen de retenue (14) comporte un recouvrement de type boîtier entourant la plaque de support (6) et/ou au moins le pied de fixation (10), en particulier entièrement.

7. Dispositif de support (2) selon au moins l'une des revendications précédentes, **caractérisé en ce que** le composant de véhicule (16) comporte un canal de câble, un adaptateur, une caméra, un système d'assistance à la conduite et/ou l'habillement d'un toit de véhicule.

8. Dispositif de support (2) selon l'une des revendications précédentes, **caractérisé en ce que** le moyen de retenue (14) comporte une matière plastique à un ou plusieurs composants, un tissu et/ou un métal, en particulier un métal léger.
